# EUROPÄISCHE PATENTSCHRIFT

(11) **EP 3 571 083 B1**
(45) Veröffentlichungstag und Bekanntmachung des Hinweises auf die Patenterteilung: **02.03.2022**
(21) Anmeldenummer: 18701118.4
(22) Anmeldetag: 10.01.2018
(51) Int. Cl.: B60K 35/00, G09G 1/00, B62J 50/20, G09G 5/00, G09G 5/14, G06F 3/0488

(54) **EINSPURFAHRZEUG MIT EINER ANZEIGEEINRICHTUNG**
SINGLE TRACK VEHICLE WITH A DISPLAY DEVICE
VÉHICULE DE TYPE MOTOCYCLETTE AVEC UN DISPOSITIF D'AFFICHAGE

(30) Priorität: 19.01.2017 DE 102017200854
(43) Veröffentlichungstag der Anmeldung: 27.11.2019
(73) Patentinhaber: Bayerische Motoren Werke Aktiengesellschaft, 80809 München (DE)
(72) Erfinder: HORNA, Günter, 80801 München (DE)
(86) Internationale Anmeldenummer: PCT/EP2018/050488
(87) Internationale Veröffentlichungsnummer: WO 2018/134088

(56) Entgegenhaltungen:
- WO-A2-2014/134148
- WO-A2-2014/134148
- US-A1- 2013 293 364
- US-A1- 2013 293 364
- US-A1- 2015 363 087
- US-A1- 2015 363 087

## Beschreibung

Die Erfindung betrifft ein Einspurfahrzeug, insbesondere ein Motorrad, mit einer Anzeigeeinrichtung.

Im Fokus der derzeitigen Entwicklung von Einspurfahrzeugen liegt eine Verbesserung der Fahrer-Einspurfahrzeug-Schnittstelle. Eine besondere Herausforderung liegt dabei darin, die ständig wachsende Vielzahl an Funktionen des Einspurfahrzeuges für einen Fahrer des Einspurfahrzeuges sicher und komfortabel bedienbar zu gestalten. Eine Übernahme von Konzepten aus dem Automobilbereich ist dabei nicht zielführend, da der in einem Automobil für große oder mehrere Anzeigeeinrichtungen oder Bedieneinrichtungen zur Verfügung stehende Bauraum bei einem Einspurfahrzeug nicht zur Verfügung steht.

US 2013/293364 A1 offenbart ein Einspurfahrzeug mit einer Anzeigeeinrichtung mittels welcher zwei verschiedene Layouts realisierbar sind.

Der Erfindung liegt die Aufgabe zu Grunde, ein gegenüber dem Stand der Technik verbessertes Einspurfahrzeug anzugeben.

Diese Aufgabe wird durch die Merkmale des unabhängigen Patentanspruchs gelöst. Vorteilhafte Weiterbildungen der Erfindung sind den abhängigen Ansprüchen zu entnehmen.

Die Erfindung beruht auf dem Gedanken, die bei einem Einspurfahrzeug für eine Anzeige von Informationen zur Verfügung stehende Anzeigefläche besonders wirksam mehrfach zu nutzen, um je nach Fahrsituation einem Fahrer die notwendigen oder besonders hilfreichen Informationen wirksam zu vermitteln.

Ein erfindungsgemäßes Einspurfahrzeug weist eine Anzeigeeinrichtung, wie beispielsweise ein Grafikdisplay oder ein freiprogrammierbares Instrumentenkombinations-Instrument, und eine Steuereinrichtung, wie beispielsweise eine Prozessoreinrichtung, auf. Mit der Anzeigeeinrichtung ist die Darstellung von Informationen auf einem durch die Anzeigeeinrichtung realisierten Anzeigefeld möglich.

Die Steuereinrichtung ist hardwaretechnisch und/oder softwaretechnisch derart eingerichtet und mit der Anzeigeeinrichtung gekoppelt, dass mittels der Anzeigeeinrichtung, insbesondere wahlweise oder alternativ, mindestens ein erstes Anzeige-Layout und ein zweites Anzeige-Layout realisierbar sind, wobei das erste und das zweite Anzeige-Layout mindestens ein Haupt-Anzeigefeld aufweisen.

Beim automatisch oder manuell ausgelösten Schalten auf das erste Anzeige-Layout werden im Bereich des Haupt-Anzeigefeldes die aktuelle Geschwindigkeit und/oder die aktuelle Motordrehzahl und/oder die aktuelle Fahrstufe und/oder eine aktuelle Soll-Geschwindigkeit des Einspurfahrzeuges angezeigt.

Beim automatisch oder manuell ausgelösten Schalten auf das zweite Anzeige-Layout werden im Bereich des Haupt-Anzeigefeldes mehrere Menüpunkte eines Auswahlmenüs und/oder Informationen über Komfortfunktionen des Einspurfahrzeuges dargestellt. Ein Schalten auf ein Anzeige-Layout umfasst auch eine durch die Steuereinrichtung bewirkte Darstellung von Informationen auf dem Anzeigefeld der Anzeigeeinrichtung gemäß dem Anzeige-Layout.

Das Haupt-Anzeigefeld ist vorzugsweise bei der Realisierung des ersten Anzeige-Layouts und des zweiten Anzeige-Layouts gleich groß. Das Haupt-Anzeigefeld belegt vorzugsweise mehr als 50%, mehr als 60%, mehr als 70% oder mehr als 80% der Anzeigefläche des gesamten Anzeigefeldes. Vorzugsweise belegt das Haupt-Anzeigefeld das Zentrum oder die Mitte des Anzeigefeldes.

Durch die Erfindung wird erreicht, dass der begrenzte bei einem Einspurfahrzeug für eine Anzeigeeinrichtung zur Verfügung stehende Bauraum effizient genutzt wird, indem ein Haupt-Anzeigefeld, je nach Fahr- oder Bediensituation, zur Anzeige verschiedener Informationen verwendet wird. Insbesondere dadurch, dass das Haupt-Anzeigefeld zeitweise für die Darstellung von Menüpunkten eines Auswahlmenüs verwendet wird, kann die Bedienung des Einspurfahrzeuges, insbesondere die Bedienung eines Auswahlmenüs erheblich verbessert werden.

Welche Informationen erfindungsgemäß in welcher Situation auf dem Haupt-Anzeigefeld dargestellt werden ist das Ergebnis umfangreicher, der Erfindung zu Grunde liegender Simulationen und Usability-Tests. Ziel dieser Simulationen und Usability-Tests war es, einem Fahrer eines Einspurfahrzeuges in jeder Situation an der geeigneten und vom Fahrer erwarteten Stelle die nötigen oder hilfreiche Informationen so anzuzeigen, dass er das Einspurfahrzeug und seine Funktionen sicher und komfortabel bedienen kann, ohne von seiner eigentlichen Fahraufgabe zu stark abgelenkt zu werden.

Es ist eine Weiterbildung der Erfindung, dass das erste und das zweite Anzeige-Layout mindestens ein erstes Neben-Anzeigefeld aufweisen, das jeweils neben, insbesondere unter, dem Haupt-Anzeigefeld liegt.

Vorzugsweise werden auf dem ersten Neben-Anzeigefeld bei einer Darstellung gemäß erstem und zweitem Anzeige-Layout zumindest teilweise identische Informationen, insbesondere Statusinformationen zu Komfortfunktionen des Einspurfahrzeuges, dargestellt, insbesondere an identischer Position. Vorzugsweise umfassen die Statusinformationen zu Komfortfunktionen die Außentemperatur und/oder den Status der Griffheizung und/oder den Status der Sitzheizung und/oder den Verbindungsstatus eines Kommunikationsgerätes und/oder die Empfangsstärke eines Kommunikationsgerätes und/oder Statusinformationen einer Beleuchtungseinrichtung des Einspurfahrzeuges.

Es ist eine Weiterbildung der Erfindung, dass das erste und das zweite Anzeige-Layout mindestens ein zweites Neben-Anzeigefeld aufweisen, das jeweils neben, insbesondere über, dem Haupt-Anzeigefeld liegt.

Vorzugsweise werden auf dem zweiten Neben-Anzeigefeld beim ersten und beim zweiten Anzeige-Layout zumindest teilweise oder ausschließlich identische Informationen, insbesondere reichweitebezogene Informationen des Einspurfahrzeuges, dargestellt, insbesondere an identischer Position. Die reichweitebezogenen Informationen des Einspurfahrzeuges umfassen vorzugsweise den Tankfüllstand und/oder die prognostizierte verbleibende Reichweite.

Es ist eine Weiterbildung der Erfindung, dass das erste und das zweite Anzeige-Layout mindestens ein drittes Neben-Anzeigefeld aufweisen, das jeweils neben, insbesondere über, dem Haupt-Anzeigefeld liegt.

Vorzugsweise werden beim Schalten auf das zweite Anzeige-Layout im Bereich des dritten Neben-Anzeigefeldes die aktuelle Geschwindigkeit und/oder die aktuelle Motordrehzahl und/oder die aktuelle Fahrstufe und/oder eine aktuelle Soll-Geschwindigkeit des Einspurfahrzeuges angezeigt, und beim Schalten auf das erste Anzeige-Layout der Bereich des dritten Neben-Anzeigefeldes als Erweiterungsbereich des Haupt-Anzeigefeldes, insbesondere zur Vervollständigung einer Grafikdarstellung auf dem Haupt-Anzeigefeld, genutzt.

Eine Weiterbildung der Erfindung sieht eine Bedieneinrichtung vor, die derart mit der Steuereinrichtung zusammenwirkt, dass in Reaktion auf ein Ausgabesignal der Bedieneinrichtung von dem ersten auf das zweite Anzeige-Layout umgeschaltet wird (von einer Informationsdarstellung gemäß erstem Anzeige-Layout auf eine Informationsdarstellung gemäß zweitem Anzeige-Layout umgeschaltet wird) und umgekehrt, beispielsweise ausgelöst durch einen Aufruf eines Auswahlmenüs durch einen Nutzer mittels der Bedieneinrichtung.

Erfindungsgemäß wird eine Erfassungseinrichtung vorgesehen, die derart mit der Steuereinrichtung zusammenwirkt, dass in Reaktion auf ein Ausgabesignal der Erfassungseinrichtung von dem ersten auf das zweite Anzeige-Layout umgeschaltet wird und umgekehrt, beispielsweise ausgelöst durch ein Überschreiten eines vorgegebenen Geschwindigkeitswertes oder eines vorgegebenen Beschleunigungswertes.

Als Erfassungseinrichtung wird erfindungsgemäß eine Geschwindigkeitsmesseinrichtung oder Beschleunigungsmesseinrichtung eingesetzt.

Gemäß nicht beanspruchter Weiterbildungen können auch eine Ortsermittlungseinrichtung (Erfassung eines aktuellen Ortes) eines Navigationssystems oder eine Empfangseinrichtung eines Kommunikationsmoduls (Erfassung eines eingehenden Rufs) eingesetzt werden.

Im Folgenden wird die Erfindung anhand von Beispielen unter Bezugnahme auf die folgenden Figuren näher erläutert:
- Figur 1: zeigt einen Teil eines vereinfachten prinzipiellen Blockschaltbildes eines Einspurfahrzeuges;
- Figur 2: zeigt eine vereinfachte Prinzipdarstellung eines Anzeigefeldes.

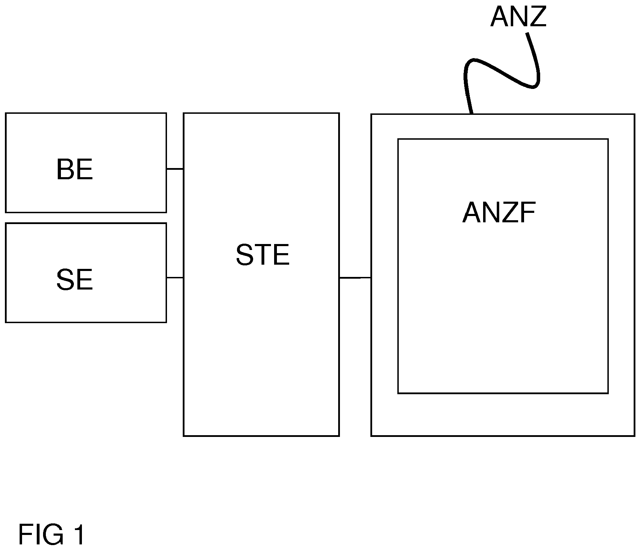

Figur 1 zeigt folgende für die Erklärung der Erfindung relevanten Komponenten oder Aggregate eines Einspurfahrzeuges, wie beispielsweise eines Motorrades:
- eine Anzeigeeinrichtung ANZ, wie ein frei programmierbares Grafikdisplay;
- eine Bedieneinrichtung BE, wie ein oder mehrere Tasten, Drucksteller, Schalter oder Drehsteller;
- eine Erfassungseinrichtung SE, wie ein Geschwindigkeitssensor oder ein Beschleunigungssensor;
- eine Steuereinrichtung STE, wie eine Prozessoreinrichtung, die eine oder mehrere Steuergeräte, beispielsweise ein Haupt-Steuergerät und/oder ein Grafik-Steuergerät umfassen kann, und die programmtechnisch derart eingerichtet und mit der Anzeigeeinrichtung ANZ, der Bedieneinrichtung BE und der Erfassungseinrichtung SE gekoppelt ist, dass je nach Fahr- oder Bediensituation auf einem Anzeigefeld ANZF der Anzeigeeinrichtung ANZ die für den Fahrer aktuell nötigen oder hilfreichen Informationen angezeigt werden.

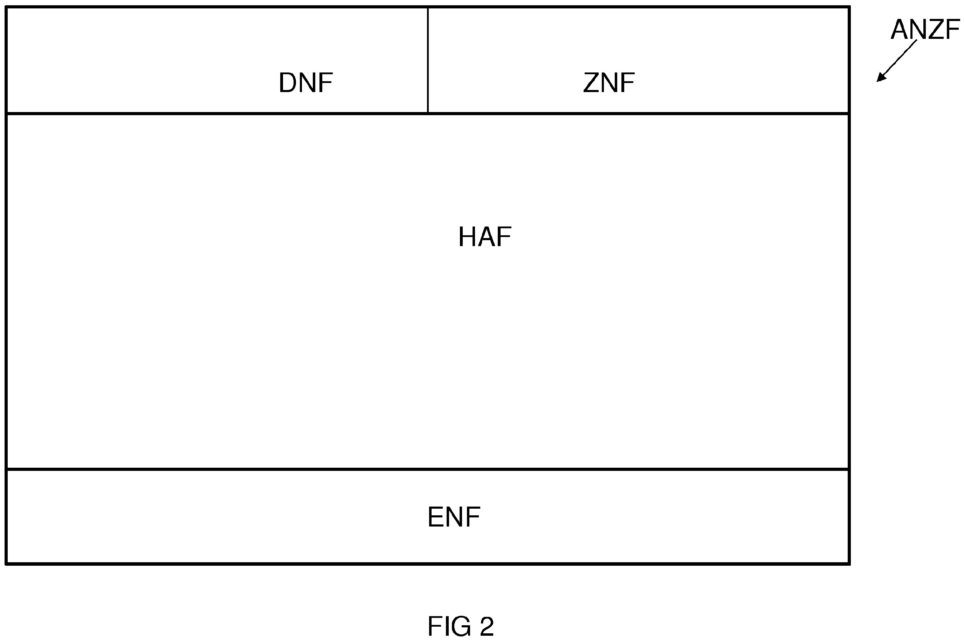

Figur 2 zeigt eine prinzipielle Aufteilung eines durch die Anzeigeeinrichtung ANZ realisierten Anzeigefeldes (Displayfeldes) ANZF in:
- ein Haupt-Anzeigefeld HAF, durch welches das Zentrum des Anzeigefeldes ANZF belegt ist, und durch das mehr als 50 Prozent der Fläche des Anzeigefeldes belegt werden;
- ein erstes Neben-Anzeigefeld ENF, das aus Sicht des Fahrers unter dem Haupt-Anzeigefeld HAF angeordnet ist;
- ein zweites Neben-Anzeigefeld ZNF, das aus Sicht des Fahrers über dem Haupt-Anzeigefeld HAF angeordnet ist; und
- ein drittes Neben-Anzeigefeld DNF, das aus Sicht des Fahrers ebenfalls über dem Haupt-Anzeigefeld HAF und seitlich neben dem zweiten Neben-Anzeigefeld ZNF angeordnet ist.

Die Anzeigeeinrichtung ANZ kann mittels der Steuereinrichtung STE in mindestens zwei verschiedene Anzeige-Layouts geschaltet werden, in denen die genannten Anzeigefelder mit verschiedenen anzuzeigenden Informationen beaufschlagt werden können.

In einem ersten Anzeige-Layout ("Szenario Fahren") werden fahrrelevante Inhalte in den Vordergrund gestellt. Dazu werden auf dem Haupt-Anzeigefeld HAF Informationen wie die aktuelle Geschwindigkeit und/oder die aktuelle Motordrehzahl und/oder die aktuelle Fahrstufe und/oder eine aktuelle Soll-Geschwindigkeit des Einspurfahrzeuges dargestellt.

Im zweiten Anzeige-Layout ("Szenario Menübedienung") werden bedienrelevante Inhalte in den Vordergrund gestellt. Dazu werden im Bereich des Haupt-Anzeigefeldes HAF mehrere Menüpunkte eines Auswahlmenüs, beispielsweise in Form von Auswahlkacheln, und/oder Informationen über Komfortfunktionen des Einspurfahrzeuges dargestellt. In diesem Anzeige-Layout werden Informationen wie die aktuelle Geschwindigkeit und/oder die aktuelle Motordrehzahl und/oder die aktuelle Fahrstufe und/oder eine aktuelle Soll-Geschwindigkeit des Einspurfahrzeuges in dem dritten Neben-Anzeigefeld DNF dargestellt, wobei beispielsweise die Schriftgröße für die aktuelle Geschwindigkeit kleiner ist als die Schriftgröße für die Darstellung der aktuellen Geschwindigkeit im ersten Anzeige-Layout.

Der Übergang vom ersten Anzeige-Layout zum zweiten Anzeige-Layout erfolgt derart animiert, dass beispielsweise die Darstellung der aktuellen Geschwindigkeit quasi-kontinuierlich vom Haupt-Anzeigefeld HAF zum dritten Neben-Anzeigefeld DNF bewegt wird.

Beim Schalten des dritten Neben-Anzeigefeldes DNF auf das erste Anzeige-Layout wird das Neben-Anzeigefeld DNF als Erweiterungsbereich des Haupt-Anzeigefeldes HAF genutzt, insbesondere zur Vervollständigung einer Grafikdarstellung auf dem Haupt-Anzeigefeld HAF bezüglich der aktuellen Motordrehzahl.

Bei beiden Anzeige-Layouts werden in dem zweiten Neben-Anzeigefeld ZNF zumindest teilweise identische Informationen, insbesondere reichweitebezogene Informationen des Einspurfahrzeuges, dargestellt, insbesondere an identischer Position, wie beispielsweise Informationen über den Tankfüllstand und die verbleibende Reichweite.

Bei beiden Anzeige-Layouts werden auf dem ersten Neben-Anzeigefeld ENF zumindest teilweise identische Informationen, insbesondere Statusinformationen zu Komfortfunktionen des Einspurfahrzeuges, dargestellt, insbesondere an identischer Position, wie beispielsweise die Außentemperatur und/oder der Status der Griffheizung und/oder der Status der Sitzheizung und/oder der Verbindungsstatus eines Kommunikationsgerätes und/oder die Empfangsstärke eines Kommunikationsgerätes und/oder Statusinformationen einer Beleuchtungseinrichtung.

## Patentansprüche

1. Einspurfahrzeug
- mit einer Anzeigeeinrichtung (ANZ) und
- mit einer Steuereinrichtung (STE), die derart eingerichtet und mit der Anzeigeeinrichtung (ANZ) gekoppelt ist,
- dass mittels der Anzeigeeinrichtung (ANZ) mindestens ein erstes Anzeige-Layout und ein zweites Anzeige-Layout realisierbar sind,
- wobei das erste und das zweite Anzeige-Layout mindestens ein Haupt-Anzeigefeld (HAF) aufweisen,
- wobei beim Schalten auf das erste Anzeige-Layout im Bereich des Haupt-Anzeigefeldes (HAF) die aktuelle Geschwindigkeit und/oder die aktuelle Motordrehzahl und/oder die aktuelle Fahrstufe und/oder eine aktuelle Soll-Geschwindigkeit des Einspurfahrzeuges angezeigt werden, und
- wobei beim Schalten auf das zweite Anzeige-Layout im Bereich des Haupt-Anzeigefeldes (HAF) mehrere Menüpunkte eines Auswahlmenüs und/oder Informationen über Komfortfunktionen des Einspurfahrzeuges dargestellt werden, **dadurch gekennzeichnet, dass** das Einspurfahrzeug weiterhin:
- eine Erfassungseinrichtung (SE) umfasst, die derart mit der Steuereinrichtung (STE) zusammenwirkt, dass in Reaktion auf ein Ausgabesignal der Erfassungseinrichtung (SE) von dem ersten auf das zweite Anzeige-Layout umgeschaltet wird und umgekehrt, wobei die Erfassungseinrichtung einen Geschwindigkeitssensor und/oder einen Beschleunigungssensor umfasst.

2. Einspurfahrzeug nach Anspruch 1,
bei dem das erste und das zweite Anzeige-Layout mindestens ein erstes Neben-Anzeigefeld (ENF) aufweisen, das jeweils neben, insbesondere unter, dem Haupt-Anzeigefeld (HAF) liegt.

3. Einspurfahrzeug nach einem der vorhergehenden Ansprüche,
bei dem auf dem ersten Neben-Anzeigefeld (ENF) beim ersten und beim zweiten Anzeige-Layout zumindest teilweise identische Informationen, insbesondere Statusinformationen zu Komfortfunktionen des Einspurfahrzeuges, dargestellt werden, insbesondere an identischer Position.

4. Einspurfahrzeug nach einem der vorhergehenden Ansprüche,
bei dem das erste und das zweite Anzeige-Layout mindestens ein zweites Neben-Anzeigefeld (ZNF) aufweisen, das jeweils neben, insbesondere über, dem Haupt-Anzeigefeld (HAF) liegt.

5. Einspurfahrzeug nach einem der vorhergehenden Ansprüche,
bei dem auf dem zweiten Neben-Anzeigefeld (ZNF) beim ersten und beim zweiten Anzeige-Layout zumindest teilweise identische Informationen, insbesondere reichweitebezogene Informationen des Einspurfahrzeuges, dargestellt werden, insbesondere an identischer Position.

6. Einspurfahrzeug nach einem der vorhergehenden Ansprüche,
bei dem das erste und das zweite Anzeige-Layout mindestens ein drittes Neben-Anzeigefeld (DNF) aufweisen, das jeweils neben, insbesondere über, dem Haupt-Anzeigefeld (HAF) liegt.

7. Einspurfahrzeug nach einem der vorhergehenden Ansprüche,
wobei beim Schalten auf das zweite Anzeige-Layout im Bereich des dritten Neben-Anzeigefeldes (DNF) die aktuelle Geschwindigkeit und/oder die aktuelle Motordrehzahl und/oder die aktuelle Fahrstufe und/oder eine aktuelle Soll-Geschwindigkeit des Einspurfahrzeuges angezeigt werden, und
- wobei beim Schalten auf das erste Anzeige-Layout der Bereich des dritten Neben-Anzeigefeldes (DNF) als Erweiterungsbereich des Haupt-Anzeigefeldes (HAF), insbesondere zur Vervollständigung einer Grafikdarstellung auf dem Haupt-Anzeigefeld (HAF), genutzt wird.

8. Einspurfahrzeug nach einem der vorhergehenden Ansprüche,
mit einer Bedieneinrichtung (BE), die derart mit der Steuereinrichtung (STE) zusammenwirkt, dass in Reaktion auf ein Ausgabesignal der Bedieneinrichtung (BE) von dem ersten auf das zweite Anzeige-Layout umgeschaltet wird und umgekehrt.

## Claims

1. Single-track vehicle
- having a display device (ANZ) and
- having a control device (STE) which is set up and is coupled to the display device (ANZ) in such a manner
- that at least a first display layout and a second display layout can be implemented by means of the display device (ANZ),
- wherein the first display layout and the second display layout have at least one main display field (HAF),
- wherein, in the case of switching to the first display layout, the current speed and/or the current engine speed and/or the current gear stage and/or a current desired speed of the single-track vehicle is/are displayed in the region of the main display field (HAF), and
- wherein, in the case of switching to the second display layout, a plurality of menu items of a selection menu and/or information relating to comfort functions of the single-track vehicle is/are presented in the region of the main display field (HAF), **characterized in that** the single-track vehicle also comprises:
- a capture device (SE) which interacts with the control device (STE) in such a manner that, in response to an output signal from the capture device (SE), there is a changeover from the first display layout to the second display layout and vice versa, wherein the capture device comprises a speed sensor and/or an acceleration sensor.

2. Single-track vehicle according to Claim 1,
in which the first display layout and the second display layout have at least one first secondary display field (ENF) which is respectively beside, in particular below, the main display field (HAF).

3. Single-track vehicle according to one of the preceding claims,
in which at least partially identical information, in particular status information relating to comfort functions of the single-track vehicle, is presented in the first secondary display field (ENF) in the first display layout and in the second display layout, in particular at an identical position.

4. Single-track vehicle according to one of the preceding claims,
in which the first display layout and the second display layout have at least one second secondary display field (ZNF) which is respectively beside, in particular above, the main display field (HAF).

5. Single-track vehicle according to one of the preceding claims,
in which at least partially identical information, in particular range-based information relating to the single-track vehicle, is presented in the second secondary display field (ZNF) in the first display layout and in the second display layout, in particular at an identical position.

6. Single-track vehicle according to one of the preceding claims,
in which the first display layout and the second display layout have at least one third secondary display field (DNF) which is respectively beside, in particular above, the main display field (HAF).

7. Single-track vehicle according to one of the preceding claims,
wherein, upon switching to the second display layout, the current speed and/or the current engine speed and/or the current gear stage and/or a current desired speed of the single-track vehicle is/are displayed in the region of the third secondary display field (DNF), and
- wherein, upon switching to the first display layout, the region of the third secondary display field (DNF) is used as an extended region of the main display field (HAF), in particular for the purpose of completing a graphical presentation in the main display field (HAF).

8. Single-track vehicle according to one of the preceding claims,
having an operating device (BE) which interacts with the control device (STE) in such a manner that, in response to an output signal from the operating device (BE), there is a changeover from the first display layout to the second display layout and vice versa.

## Revendications

1. Véhicule monotrace comprenant
- un dispositif d'affichage (ANZ) et
- un dispositif de commande (STE) qui est conçu et couplé au dispositif d'affichage (ANZ) de telle sorte que
- au moins une première disposition d'affichage et une deuxième disposition d'affichage puissent être mises en œuvre au moyen du dispositif d'affichage (ANZ),
- la première et la deuxième disposition d'affichage comportant au moins un champ d'affichage principal (HAF),
- la vitesse actuelle et/ou la vitesse de rotation actuelle du moteur et/ou le rapport actuel et/ou une vitesse cible actuelle du véhicule monotrace étant affichés lors du passage dans la zone du champ d'affichage principal (HAF) à la première disposition d'affichage, et
- plusieurs éléments d'un menu de sélection et/ou des informations sur des fonctions de confort du véhicule monotrace étant affichés dans la zone du champ d'affichage principal (HAF) lors du passage à la deuxième disposition d'affichage, **caractérisé en ce que** le véhicule monotrace comprend en outre :
- un dispositif de détection (SE) qui coopère avec le dispositif de commande (STE) de telle sorte qu'un passage de la première à la deuxième disposition d'affichage et inversement soit effectué en réponse à un signal de sortie du dispositif de détection (SE), le dispositif de détection comprenant un capteur de vitesse et/ou un capteur d'accélération.

2. Véhicule monotrace selon la revendication 1, dans lequel la première et la deuxième disposition d'affichage comportent au moins un premier champ d'affichage secondaire (ENF) qui est situé à côté, notamment au-dessous, du champ d'affichage principal (HAF).

3. Véhicule monotrace selon l'une des revendications précédentes, dans lequel des informations au moins partiellement identiques, en particulier des informations d'état sur des fonctions de confort du véhicule monotrace, sont affichées dans le premier champ d'affichage secondaire (ENF) dans la première et la deuxième disposition d'affichage, en particulier à des positions identiques.

4. Véhicule monotrace selon l'une des revendications précédentes, dans lequel la première et la deuxième disposition d'affichage comportent au moins un deuxième champ d'affichage secondaire (ZNF) qui est situé à côté, en particulier au-dessus, du champ d'affichage principal (HAF) .

5. Véhicule monotrace selon l'une des revendications précédentes, dans lequel des informations au moins partiellement identiques, en particulier des informations sur l'autonomie du véhicule monotrace, sont affichées dans le deuxième champ d'affichage secondaire (ZNF) dans la première et la deuxième disposition d'affichage, en particulier à des positions identiques.

6. Véhicule monotrace selon l'une des revendications précédentes, dans lequel la première et la deuxième disposition d'affichage comportent au moins un troisième champ d'affichage secondaire (DNF) qui est situé à côté, en particulier au-dessus, du champ d'affichage principal (HAF) .

7. Véhicule monotrace selon l'une des revendications précédentes, dans lequel la vitesse actuelle et/ou la vitesse de rotation actuelle du moteur et/ou le rapport actuel et/ou une vitesse cible actuelle du véhicule monotrace sont affichés dans la zone du troisième champ d'affichage secondaire (DNF) lors du passage à la deuxième disposition d'affichage, et
- lors du passage à la première disposition d'affichage, la zone du troisième champ d'affichage secondaire (DNF) étant utilisée comme zone d'extension du champ d'affichage principal (HAF), notamment pour compléter une représentation graphique dans le champ d'affichage principal (HAF).

8. Véhicule monotrace selon l'une des revendications précédentes, comprenant un dispositif de manœuvre (BE) qui coopère avec le dispositif de commande (STE) de telle sorte qu'un passage de la première à la deuxième disposition d'affichage et inversement est effectué en réponse à un signal de sortie du dispositif de manœuvre (BE) .
